# EUROPEAN PATENT APPLICATION

(11) **EP 4 644 575 A1**
(43) Date of publication of application: **05.11.2025**
(21) Application number: 24020132.7
(22) Date of filing: 29.04.2024
(51) Int. Cl.: C21B 13/00

(54) **METHOD AND PROCESS ARRANGEMENT FOR HEATING A REDUCING GAS**

(71) Applicant: Selas-Linde GmbH, 82049 Pullach (DE)
(72) Inventor: Lemme, Volkmar, 82049 Pullach (DE); Löwe, Lennard, 82049 Pullach (DE)
(74) Representative: Lu, Jing

(57) **Abstract**

The invention relates to a method and a process arrangement (100) for heating a process gas (1), in particular containing hydrogen and/or carbon monoxide, to a reaction temperature level. In the method (100) the reducing gas (1) is subjected to direct electric heating (10) to obtain a first preheated reducing gas (2) having a first temperature level, and the first preheated reducing gas (2) is subjected to indirect electric heating (20) to obtain a second preheated reducing gas (3) having a second temperature level higher than the first temperature level. The process arrangement (100) is configured to perform the method (100).

## Description

The invention relates to a method and a process arrangement for heating a reducing gas used in a direct reduced iron process.

### Background of the invention

In steelmaking, direct reduced iron (DRI) is used as a raw material. In order to produce DRI, oxygen has to be removed from iron ore in the solid state, i.e. without melting the iron ore. To remove oxygen from the iron ore, a reducing gas, also called DRI gas, containing hydrogen, carbon monoxide, or syngas, i.e. a mixture of hydrogen and carbon monoxide, is used.

When performing the reduction with hydrogen, the following reactions take place:

3Fe₂O₃ + H₂ → 2Fe₃O₄ + H₂O

Fe₃O₄ + H₂ → 3FeO + H₂O

FeO + H₂ → Fe + H₂O

When performing the reduction with carbon monoxide, the following reactions take place:

3Fe₂O₃ + CO → 2Fe₃O₄ + CO₂

Fe₃O₄ + CO → 3FeO + CO₂

FeO + CO → Fe + CO₂

When using syngas in the reaction, both reaction paths take place simultaneously.

The DRI processes require the reducing gas to be heated to temperatures of at least 800°C, preferentially above 900 °C, or higher before being fed to a reactor for the reduction of iron ore to (carburized) elemental iron. Currently, the heating process of the reducing gas is performed by a fired heater, in which usually natural gas or CO/H₂-rich tail gas is fired.

However, steelmaking is transitioning to reduce CO₂ emissions and increase efficiency. DRI processes thus trend towards increased use of H₂ instead of methane or syngas, both as a reducing agent and for the firing of reducing gas heaters. However, the availability especially of green H₂ is limited and its production from renewable power costly and energy-intensive. Therefore, electric heating processes come into play as an alternative. Yet, currently available technologies are mostly constituted by one electric heating technology only.

Further, hot hydrogen gas or syngas can be injected into a blast furnace to achieve reduction of iron ore directly in the blast furnace. In such processes, iron ore, direct reduced iron and coking coal are provided in a blast furnace to make steel, while also hydrogen gas or syngas are provided in the blast furnace. In this process, iron ore is reduced and simultaneously, steel is produced, i.e. the transportation of direct reduced iron, which can be circumvented and re-oxidation of the direct reduced iron can be prevented.

The present invention is aimed at making the method and process arrangement for heating the reducing gas more sustainable, efficient and durable.

### Disclosure of the invention

Against this background, a method and a process arrangement for heating a reducing gas to be used in a direct reduced iron process with the features of the independent claims are proposed. Embodiments are the subject of the dependent patent claims and the following description.

Before explaining the advantages of the present invention, some terms used in the description of the invention are defined in more detail below.

The present application uses the term "temperature level" to characterize temperatures, which is intended to express that corresponding temperatures need not be used in the form of exact temperature values in a corresponding system. However, such temperatures are typically within certain ranges, for example ± 1%, 5%, 10%, 20% or 25% around an average value. Temperature levels can be in disjoint ranges or in ranges that overlap each other.

In the present invention and its embodiments, the heating of a process gas, in particular containing hydrogen and/or carbon monoxide, is performed. Such a process gas can for example be used as a reducing gas to remove oxygen from iron ore performed in a DRI process using non-combustion-based heaters or directly in a blast furnace containing iron ore and direct reduced iron to make steel.

Thereby, steelmaking, in particular DRI production or reducing iron ore directly in a blast furnace, can be decarbonized compared to carbon-fuel based heaters, as no carbon-based fuel is burned for heating. Further, the efficiency of the DRI process can be improved compared to carbon-fuel based heaters, as stack losses, i.e. loss of heat due to the heat of the flue gas, can be avoided.

A high efficiency and availability of the whole DRI process or reducing iron ore in a blast furnace used for steelmaking, compared to a hydrogen-fired heater can be achieved, as conversion losses in the production, storage and burning of hydrogen are avoided.

Additionally, certain types of electric heating elements require less space compared to fired heaters.

Further, operational costs can be reduced and the availability of the heated process gas can be maximized. '

The proposed method for heating a process gas to a reaction temperature level comprises subjecting the process gas to direct electric heating to obtain a first preheated process gas having a first temperature level. In direct electric heating, the medium to be heated, i.e. the process gas, is in contact with the heating medium. In a common implementation of direct electric heating, for example an electric process heater or electric flow heater, the process gas flows through an enclosure or a vessel in which electric heating elements are arranged and configured to heat the process gas.

In the electric process heater or electric flow heater, the process gas is in contact with the electric heating elements.

After preheating with direct electric heating, the first preheated process gas is subjected to indirect electric heating to obtain a second preheated process gas having a second temperature level higher than the first temperature level. Indirect electric heating is usually performed such that the process gas is not in direct contact with heating elements. Indirect electric heating can generally be most favourably applied between 650°C and 950°C and is used to decouple the process tube, in which the process gas flows, and electric heating elements. The process gas contains hydrogen and/or carbon monoxide, i.e. can be hydrogen gas, carbon monoxide gas or a syngas. When the process gas is heated to the desired reaction temperature, in particular a temperature level above 800 °C or above 850°C or above 900°C or above 950°C, the process gas is supplied to a direct reduced iron process, in which oxygen contained in iron ore is removed from the iron ore by the process gas (see also the chemical reaction laid out above).

By performing the heating without (additional) burning of fossil fuels, e.g. only using electric heating, the above-mentioned advantages can be achieved.

Further, by using indirect electric heating and the decoupling of the process gas from the electric heating elements, in case of electric heating element defects, e.g. due to the limited lifetime of the electric heating elements in high temperature applications, maintenance on the electric heating elements can easily be performed from outside without disturbing the process gas system. In particular, multiple indirect electric heaters can be provided in parallel to achieve a certain overcapacity and allow continued operation while one or more of the indirect electric heaters are under maintenance.

Further, it is possible to reduce heat loss by adding shut off valves in the process gas inlet to the indirect electric heating, i.e. at moderate temperatures, whereas a shut off in the process gas outlet is not required. Specifically, the maintenance of the indirect electric heating elements can be performed without the need to interrupt the process gas flow and flush the process gas system.

In comparison to indirect electric heating, direct electric heating in the process flow heater allows a more compact design as the process flow heater contains the heating element inside the process gas stream. However, as such, any failure of the heating elements requires to shut off the relevant heater completely, isolate the same from the process stream, flush the direct electric heater to avoid release of flammable gases and open the system to access the electric heating elements. To achieve a high availability of the process gas heating system, multiple direct electric heaters are arranged in parallel and devices to isolate the parallel heating streams are required. Such shut-off devices are readily available only up to a certain temperature range, max. 650°C. If direct electric heaters are used above this temperature, it is practically impossible to shut down the process gas stream without taking the complete DRI loop out of operation.

In an embodiment, in the direct electric heating, one or more medium voltage electric process flow heaters are used. Medium voltage in this context means voltages of up to 7200 V. Typically, electric process flow heaters comprise a tube-shaped vessel in which a plurality of electric heating elements, for example rods, are installed. The fluid, i.e. process gas, to be heated, gas or liquid, is supplied to the vessel on one side, flows through the vessel and exits the vessel on the other side. During the flow of the fluid through the vessel, the fluid is heated by the heating elements that are heated using electric power.

By using a medium voltage electric process flow heater, installation, operation (electric transmission losses), and maintenance costs of the system can be reduced.

In an embodiment, the first temperature level is at least 360°C or at least 380°C or at least 400°C, i.e. the temperature to which the process gas is heated in the direct electric heating, e.g. by the medium voltage electric process flow heater. Further, the second temperature level is at least 800°C or at least 850°C or at least 900°C or at least 950°C, depending on the temperature demand of the DRI process.

In an embodiment, in the direct electric heating, one or more low voltage electric process flow heaters are used to obtain the first preheated process gas having the first temperature level. The structure of a low voltage electric process flow heater is similar to the medium voltage electric process flow heater, i.e. comprising a tube-shaped vessel with heating elements that directly heat the fluid flowing through the vessel. However, low voltage corresponds to voltages of up to 690 V or up to 1000 V, i.e. a significantly lower voltage than the medium voltage. When using one or more low voltage electric process flow heater, the first temperature level is at least 450°C or at least 550°C or at least 650°C.

In particular, only low voltage electric process flow heaters or only medium voltage electric process flow heaters can be used for direct electric heating. However, a combination of both one or more low voltage electric process flow heaters and one or more medium voltage electric process flow heaters is also feasible.

The optimum cross-over temperature for change from direct electric heating (with heating element in the process stream) to indirect electric heating (with heating element outside of the process stream contained in a tube or coil system) is to be determined based on cost of shut-off valves required to allow isolation of single process flow heaters for maintenance and still manageable thermal expansion mechanical stress of piping components in this section. If the cross-over temperature is below 450 °C or below 400 °C or below 370 °C, the addition of a low voltage process flow heaters should be applied due to the lower invest cost compared to additional indirect electric heating elements.

In an embodiment coil resistance electric heating or indirect electric resistance heating elements are used for indirect electric heating. In coil resistance electric heating, a current flows through a process tube or coil in which the process gas in transported. Thereby, the tube itself will be heated due to the electric resistance of the tube material and the heat will be transferred to the process gas. Indirect electric resistive heating elements can, alternatively or additionally, be used with a vessel, in which the electric resistance heating element, commonly comprising a metal wire through which an electric current flows and generates heat by the electric resistance of the wire, are arranged. The generated heat is radiated towards the fluid to be heated, in this case the process gas, which is led through the vessel in one or more process tubes.

When using coil resistance heating, the space necessary to implement the indirect electric heating can be reduced. When using indirect electric resistance heating elements, a higher degree of control over the temperature of the process gas can be achieved.

In an embodiment, the process gas is subjected to, before the direct electric heating, a waste heat heating to obtain a third preheated process gas having a third temperature level lower than the first temperature level and the third preheated process gas is supplied to the direct electric heating. In particular, the waste heat heating is performed in a heat exchanger, using waste heat as the heat medium. The waste heat can for example be waste heat from the DRI process or a process downstream of the DRI process, such as a furnace used for steelmaking, geothermal heat and/or ambient heat. Other waste heat sources that are available can also be used.

Further, a high-temperature heat pump can be used as the heat exchanger, in which the waste heat is used to heat an intermediate heating medium that is then further compressed by a compressor and used to heat the process gas. The intermediate heating medium can for example water. Ambient heat can, in particular, be used as a heat source in an air heat pump. The advantage of a (high-temperature) heat pump is that a third temperature level that is higher than the temperature of the available waste heat stream can be achieved.

The third temperature level is, in particular, at least 120°C or at least 160°C or at least 200°C, depending on the temperature level and amount of the waste heat supply.

Thereby, the electric power demand for heating the process gas to the reaction temperature can be reduced and the efficiency of the process can be increased.

In an embodiment, the second preheated process gas is further subjected to oxidation heating in which the second preheated process gas is partially oxidized, to obtain a fourth preheated process gas having a fourth temperature level higher than the second temperature level, wherein in the oxidation heating an oxidation reactor is used to obtain the fourth preheated process gas having the fourth temperature level. In particular, the fourth temperature level is greater than or equal to 950°C or more than or equal to 1050°C or greater than or equal to 1100°C.

In case the chosen DRI process or reducing of iron in the blast furnace requires inlet temperatures of the process gas of more than 950°C, the process gas can be supplied to an oxidation reactor into which oxygen is injected to increase the process gas temperature by oxidizing a small part of the process gas, as the oxidation reactions of the reducing gases (2H₂ + O₂ → 2H₂O, 2CO + O₂ → 2CO₂) are exothermal reactions. Hence, the process can flexibly be used for different DRI processes. The oxygen used in the oxidation is preferably taken from the offgas of electrolyzers used for production of green hydrogen for the process. The addition of a partial oxidation heating step can be required to achieve required high process gas temperatures, when indirect electric heating is no longer suitable due to a limited maximum temperature due to a reduced lifetime of the indirect electric heating elements.

In an embodiment, at least part of the reducing gas is subjected to a fired heating, in which a fired heater is used, to obtain a fifth preheated reducing gas having the fourth temperature level. The fired heater is used in combination with any of the previously described electric heating and/or waste heating, in particular in parallel to the previously described heating. Further, alternatively or in combination, the reducing gas, i.e. the third preheated reducing gas or the first preheated reducing gas, is subjected to the fired heating to obtain a sixth preheated reducing gas having a fifth temperature level and/or the second preheated reducing gas is subjected to, before the oxidation heating, the fired heating to obtain a seventh preheated reducing gas having a sixth temperature level. Thereby, the fired heating is implemented in series with the previous described heating and thus supports the previous described heating. For example, the fired heater can contain a "hot" or radiant section, in which heat is mainly transferred by radiant heat and a "cold" or convection section, in which heat is mainly transferred by convection. The radiant section is used to obtain the seventh preheated reducing gas having a sixth temperature level while the convection section is used to obtain the sixth preheated reducing gas having to a fifth temperature level. Further, the full fired heater, i.e. both the radiant section and convection section, can also be used to obtain the seventh preheated reducing gas having the sixth temperature level. In particular, the fifth temperature level is higher than the third temperature level and lower than the first temperature level, when the fired heating, i.e. the convection section of the fired heater, is implemented before the direct electric heating. The fifth temperature level is higher than the first temperature level and lower than the second temperature level, when the fired heating, i.e. the convection section of the fired heating, is implemented after the direct electric heating. Further, the sixth temperature level is in particular higher than the second temperature level and lower than the fourth temperature level.

By additionally using fired heating in parallel or in series to non-fired heating, a higher lifetime of the heating system can be achieved by limiting the required temperature of the indirect electric heating elements. Further, by using fired heating in parallel to non-fired heating, availability of reducing gas can be increased, for example during maintenance of faults in the non-fired heating pathway or when the non-fired pathway cannot provide enough electric energy to heat the reducing gas (grid restrictions, availability of renewable power).

The invention further relates to a process arrangement for heating a reducing gas containing hydrogen or carbon monoxide used in a direct reduced iron process, in which oxygen contained in iron raw material is removed from the iron raw material, to a reaction temperature level. The process arrangement is configured to subject a reducing gas to direct electric heating to obtain a first preheated reducing gas having a first temperature level, and subject the first preheated reducing gas to an indirect electric heating to obtain a second preheated reducing gas having a second temperature level higher than the first temperature level. In particular, the process arrangement is configured to perform the method for heating a reducing gas according to any of the presented embodiments.

For further features and advantages of such a process arrangement and embodiments thereof, reference is expressly made to the above explanations concerning the method proposed according to the invention and the embodiments, since these apply to this in the same way.

### Short description of the figures

Figure 1 shows a block chart of direct reduction iron process and the heating method according to an embodiment of the present invention,
Figure 2 shows a flow/block chart of the method/process arrangement according to an embodiment of the present invention,
Figure 3 shows a schematic diagram of a direct electric heater,
Figure 4 shows a schematic diagram of an indirect electric heater,
Figure 5 shows a flow/block chart of the method/process arrangement according to another embodiment of the present invention,
Figure 6 shows a schematic diagram of a heat pump,
Figure 7 shows a flow/block chart of the method/process arrangement according to another embodiment of the present invention, and
Figure 8 shows a flow/block chart of the method/process arrangement according to another embodiment of the present invention.

### Embodiments of the invention

The embodiments described below are described for the purpose of assisting the reader in understanding the claimed and previously explained features. They are merely representative examples and are not intended to be exhaustive and/or limiting with respect to the features of the invention. It is to be understood that the advantages, embodiments, examples, functions, features, structures and/or other aspects described above and below are not to be considered limitations on the scope of the invention as defined in the claims or limitations of equivalents to the claims, and that other embodiments may be used and modifications may be made without departing from the scope of the claimed invention.

Explanations relating to devices, apparatuses, arrangements, systems, etc., according to embodiments of the present invention may also apply to methods, processes, etc., according to embodiments of the present invention, and vice versa. Elements, process steps, etc. which are identical, have the same effect, correspond to each other in their function, are structurally identical or comparable, etc. may be indicated by identical reference signs.

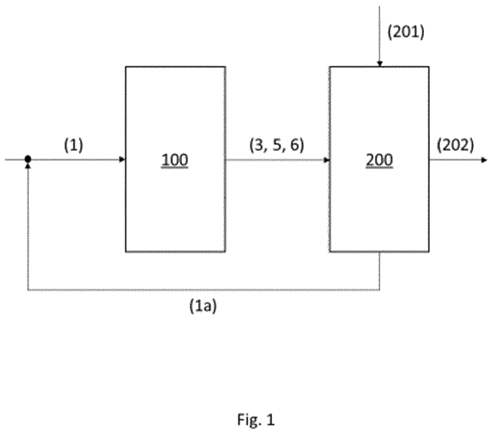

Figure 1 shows a block chart of direct reduction iron (DRI) process or reactor 200 and the heating method or process arrangement 100 according to an embodiment of the present invention.

In the DRI process or reactor 200, oxygen from iron ore is removed to produce direct reduced iron without melting the iron ore. The produced DRI can then be melted in a steel furnace to produce steel. To remove the oxygen from the iron ore, the iron ore is exposed to a reducing gas containing hydrogen or carbon monoxide. The DRI reactor 200 using a reducing gas is commonly provided in the form of a batch reactor, a shaft reactor or a fluid bed reactor.

As the removal of oxygen from the iron ore takes place in the DRI reactor 200 at a temperature between 800°C and 1200°C, the reducing gas has in turn also to be heated to this temperature level. For heating the reducing gas to the desired temperature level, commonly a fired heater using common fuel, e.g. tail gas containing hydrogen, methane or syngas have been used. The heating method or process arrangement 100 according to the invention uses non-combustion-based heaters to heat the reducing gas to the desired temperature level.

While Figure 1 describes the use of the heating method or process arrangement 100 of the invention for a DRI process 200, it can also be used in combination with a furnace, which his provided with DRI and iron ore. In this case, the process gas is used to reduce the iron ore directly in the furnace.

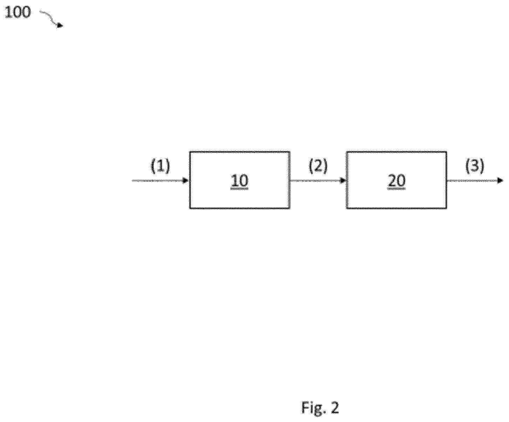

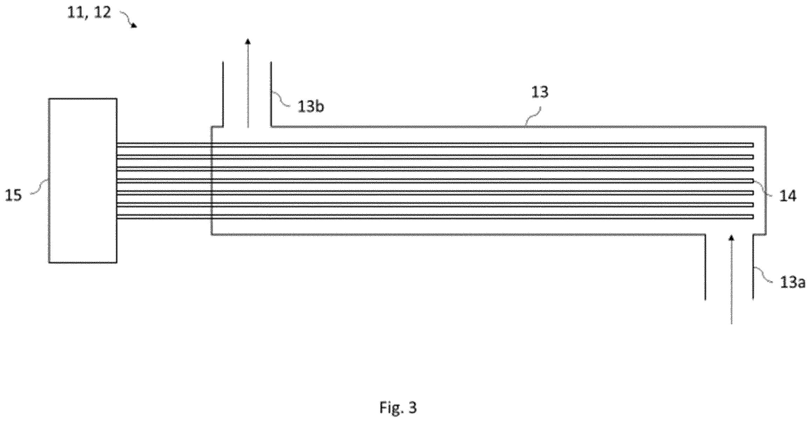

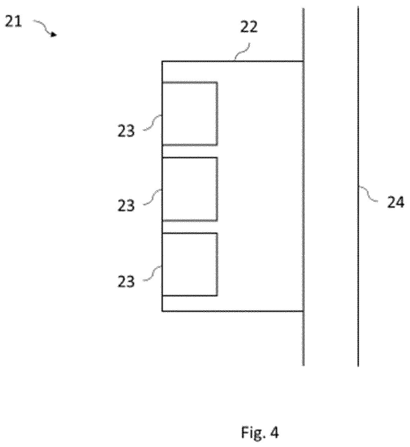

Figure 2 shows a flow or block chart of the method or process arrangement 100 respectively according to an embodiment of the present invention. Figure 3 shows a schematic diagram of a direct electric heater 11, 12 and figure 4 shows a schematic diagram of an indirect electric heater. In the following, the figures will be described together.

In the method or process arrangement 100, a reducing gas 1 containing hydrogen and/or carbon, in particular carbon monoxide, is supplied to a direct electric heating 10 performed in the direct electric heater 11, 12, in particular a medium voltage direct electric process flow heater 11 and a low voltage direct electric process flow heater 12. An example of the direct electric heater 11, 12 is shown in figure 3.

The direct electric heater 11, 12 comprises a vessel 13 that is in particular tube-shaped. On one end of the vessel 13, an inlet 13a is arranged through which the fluid to be heated by the direct electric heater 11, 12, in this case, the reducing gas 1, enters into the direct electric heater 11,12. On the other side, an outlet 13b is arranged, through which the heated fluid leaves the direct electric heater 11, 12.

In the vessel 13, heating elements 14 are arranged that are used to heat the fluid inside the vessel. The heating elements are electric heating elements that are provided with electric power by a power control unit 15 attached outside the vessel 13. The power control unit 15 is configured to provide the electric heating elements 14 with either a medium voltage of up to 7200 V in case of a medium voltage electric process flow heater 11 or a low voltage of up to a range of 690 V to 1000 V in case of a low voltage electric process flow heater 12. Further, the arrangement of the inlet 13a on the far end, with regard to the power control unit 15, of the vessel 13 and the outlet 13b on the close end is only exemplary shown and can be switched, i.e. the inlet 13a being arranged on the close end and the outlet 13b being arranged on the far end. Further, other configurations of the direct electric process flow heater 11, 12 can be used in the direct electric heating 10 and the shown schematic diagram is only used for illustration purposes.

In the medium voltage direct electric process flow heater 11 of the direct electric heating 10, the reducing gas 1 is heated to a first temperature level of at least 360°C or at least 380°C or at least 400°C to obtain a first preheated reducing gas 2, which is then supplied to the indirect electric heating 20.

In the indirect electric heating 20, the indirect electric heater 21 is used. An example of an indirect electric heater 21 is shown in Fig. 4. The indirect electric heater 21 comprises a vessel 22 in which a plurality of electric resistance heating elements 23 are arranged. Further, fluid tubes 24 are arranged in the vessel 22 through which the fluid to be heated, in this case the first preheated reducing gas 2, flows to be heated. While in the example the fluid tube 24 is shown as a straight tube, the fluid tube 24 can also be provided in the form of a coil. In particular, the fluid tube 24 can be provided with a plurality of reverse bends such that different sections of the fluid tube 24 are arranged in the vessel 22 and the fluid to be heated is exposed to the radiant heat of the plurality of electric resistance heating elements 23 several times.

The plurality of electric resistance heating elements 23 can, for example, comprise electric resistance heating bands through which a current flows. Due to the resistance of the electric resistance heating bands heat, in particular radiant heat, is generated, which is then radiated towards the fluid tubes 24 to heat the fluid inside the fluid tubes 24. In comparison to the direct electric heaters 11, 12, in the indirect electric heater 21, the electric resistance heating elements 23 are not directly in contact with the reducing gas and thus, maintenance of the indirect electrical heater 21 can be performed while the process is running. In particular, several indirect electric heaters 21 can be provided so that an overcapacity exists and the process can be fully available even during maintenance of one or more indirect electric heaters 21.

Additionally or alternatively to electric resistance heating elements 23, coil resistance heating can be used. In coil resistance heating, a current flows through coils, i.e. tubes in a coil shape, through which the process gas is transported. As the coils have resistance, heat is generated by the current, which is then transferred to the process gas.

In the indirect electric heating 20, the first preheated reducing gas 2 is heated to a second temperature level, in particular to at least 900°C or at least 925°C or at least 950°C to obtain the second preheated reducing gas 3. The temperature level necessary to be achieved depends on the DRI furnace and the temperature level necessary for the DRI process 200. The second preheated reducing gas 3 is subsequently supplied to the DRI process 200 in which oxygen is removed from the iron ore by using the heated reducing gas.

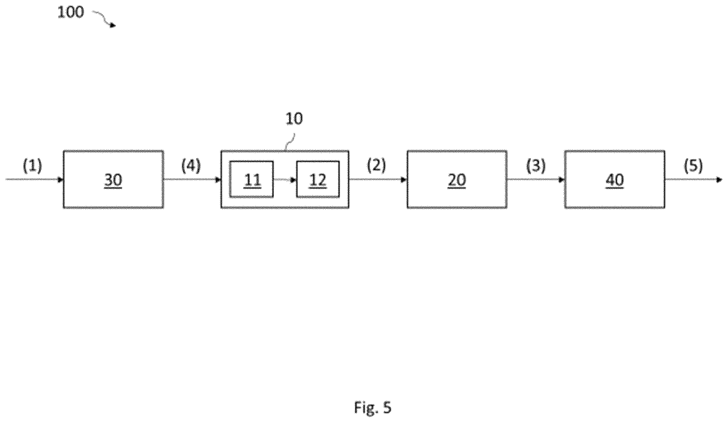

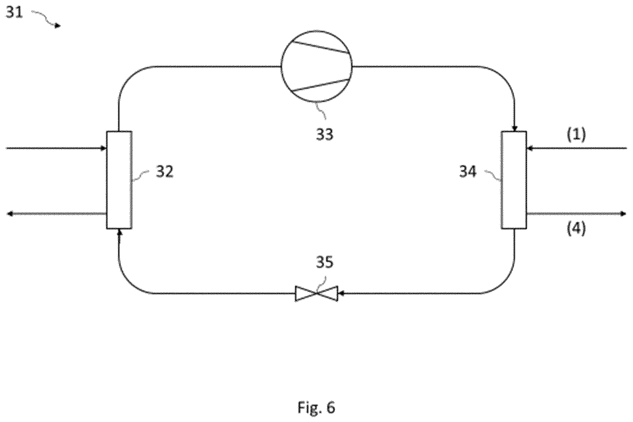

Figure 5 shows a flow/block chart of the method/process arrangement 100 according to another embodiment of the present invention. Figure 6 shows a schematic diagram of a heat pump. In the following, both figures will be described together.

In contrast to the embodiment shown in Figure 2, the method or process arrangement 100 shown in Figure 5 comprises several additional heating steps/heaters. In waste heat heating 30, performed before the direct electric heating 10, a heat exchanger, in particular a heat pump 31, is used to heat the reducing gas 1 to a third temperature level that is below the first temperature level to obtain a third preheated reducing gas 4. The third temperature level is up to 160°C or up to 180°C or up to 200°C. In the heat exchanger of the waste heat heating 30, waste heat of the DRI process 200 or from a process in which the DRI is used, such as a steelmaking process, is used as the heat medium. Further, heat from, e.g., geothermal sources or ambient can be used for heating.

In the heat pump 31 (see Fig. 6), waste heat is transferred to an intermediate heat medium, for example water, in a first heat exchanger. Afterwards, the intermediate heat medium is compressed by a compressor 33 and supplied to a second heat exchanger 34, in which the heat from the intermediate heat medium is transferred to the reducing gas 1 to obtain the third preheated reducing gas 4. Afterwards, the intermediate heating medium is expanded in an expansion valve 35 and supplied to the first heat exchanger 32. When using ambient heat as a the waste heat, the first heat exchanger 32 can in particular be an air-liquid heat exchanger.

In the direct electric heating 10, one or more medium voltage electric process flow heaters 11 and one or more low voltage electric process flow heater 12 are used to heat the third preheated reducing gas 4 supplied by the waste heat heating 30 to the first temperature level. Here, the first temperature level is in particular at least 450°C or at least 550°C or at least 650°C. By using one or more low voltage electric process flow heaters 12, the dimensioning of the indirect heater 21 or the number of the indirect heaters 21 respectively used in the indirect electric heating 20 can be reduced.

Further, if the DRI process 200 needs a higher temperature of the reducing gas, additional oxidation heating 40 is provided to heat the second preheated reducing gas 3 to a fourth temperature level that is greater than or equal to 950°C or more than or equal to 1050°C or greater than or equal to 1100°C, depending on the temperature level needed by the DRI process 200. The thereby obtained fourth preheated reducing gas 5 is then supplied to the DRI process 200.

While in this embodiment, several additional heating steps or heater respectively are added, not all of them need to be added in every case. For example, if the waste heat from the DRI process 200 or a process downstream of the DRI process 200 is already used elsewhere, the waste heat heating 30 can be neglected.

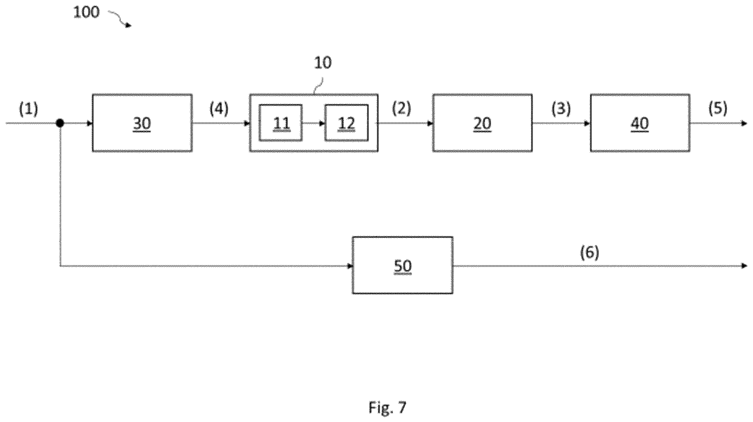

Figure 7 shows a flow/block chart of the method/process arrangement 100 according to another embodiment of the present invention. In contrast to the embodiment shown in Fig. 5, an additional fired heating 50, i.e. a fired heater, using for example hydrogen as the firing source, is added and part of the reducing gas 1 can be heated by the fired heating 50 to obtain a fifth preheated reducing gas 6 that can be used in the DRI process 200. The fired heating 50 does not necessarily need to be used at all times, but can improve the availability of heated reducing gas if, for example, part of the electric heating has to be maintained or the capacity of the electric heating is too low for the supply of heated reducing gas.

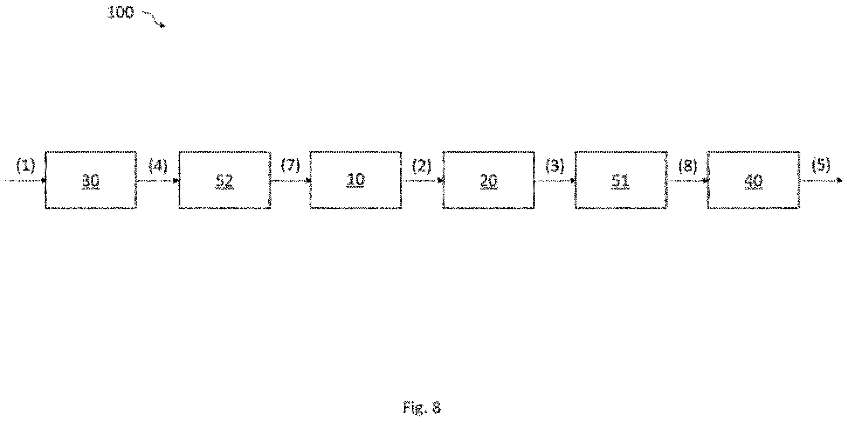

Figure 8 shows a flow/block chart of the method/process arrangement 100 according to another embodiment of the present invention. In Fig. 8, a fired heater 50 comprising a radiant section 51 and a convection section 52 is used. The convection section 52 is implemented between the waste heating 30 and the direct electric heating 10 and heats the third preheated reducing gas 4 to a fifth temperature level higher than the second temperature level and lower than the first temperature level to obtain a sixth preheated reducing gas 7 that is supplied to the direct electric heating. The radiant section 51 of the fired heater 50 is implemented between the indirect electric heating 20 and the oxidation heating 40 and heats the second preheated reducing gas 3 to a sixth temperature level higher than the second temperature level and lower than the fourth temperature level to obtain a seventh preheated reducing gas 8 that is subsequently supplied to the oxidation heating 40.

Alternatively, the convection section 52 of the fired heater 50 could also be implemented or arranged between the direct electric heating 10 and the indirect electric heating 20. In this case, the fifth temperature level is higher than the first temperature level and lower than the second temperature level.

Further, the radiant section 51 can also be implemented in parallel to the non-combustion heating and the convection section 52 and heat at least part of the reducing gas 1 to the second or fourth temperature level, depending on the presence of oxidation heating 40.

## Claims

1. Method (100) for heating a process gas (1), in particular containing hydrogen and/or carbon monoxide, to a reaction temperature level
**characterized in that**
the process gas (1) is subjected to direct electric heating (10) to obtain a first preheated process gas (2) having a first temperature level, and
the first preheated process gas (2) is subjected to indirect electric heating (20) to obtain a second preheated process gas (3) having a second temperature level higher than the first temperature level.

2. Method (100) according to claim 1, wherein in direct electric heating (10) one or more medium voltage electric process flow heaters (11) are used to obtain the first preheated process gas (2) having the first temperature level.

3. Method (100) according to any of claims 1 or 2, wherein the first temperature level is at least 360°C or at least 380°C or at least 400°C and/or the second temperature level is at least 800°C or at least 850°C or at least 900°C or at least 950°C.

4. Method (100) according to any of preceding claims, wherein in direct electric heating (10) one or more low voltage electric process flow heaters (12) are used to obtain the first preheated process gas (2) having the first temperature level.

5. Method (100) according to claim 4, wherein the first temperature level is at least 450 °C or at least 550°C or at least 650°C.

6. Method (100) according to any of the preceding claims, wherein in indirect electric heating (20) coil resistance electric heating and/or electric resistance heating elements (23) are used to obtain the second preheated process gas (3) having the second temperature level.

7. Method (100) according to any of the preceding claims, wherein the process gas (1) is subjected to, before the direct electric heating (10), a waste heat heating (30) to obtain a third preheated process gas (4) having a third temperature level lower than the first temperature level and the third preheated process gas (4) is supplied to the direct electric heating (10).

8. Method (100) according to claim 7, wherein the waste heat heating (30) is performed in a heat exchanger using waste heat as the heat medium or a high temperature heat pump using waste heat to heat an intermediate medium used to heat the process gas (1), particularly wherein the waste heat is waste heat from the direct reduced iron process (200) or a process downstream of the direct reduced iron process, geothermal heat or ambient heat.

9. Method (100) according to any of claims 7 or 8, wherein the third temperature level is up to 160°C or up to 180°C or up to 200°C or up to 300°C.

10. Method (100) according to any of the preceding claims, wherein the second preheated process gas (3) is further subjected to oxidation heating (40) in which the second preheated process gas (3) is partially oxidized to obtain a fourth preheated process gas (6) having a fourth temperature level higher than the second temperature level, wherein in the oxidation heating (40) an oxidation reactor is used to obtain the fourth preheated process gas (6) having the fourth temperature level.

11. Method (100) according to any of claims 10, wherein the fourth temperature level is greater than or equal to 950°C or more than or equal to 1050°C or greater than or equal to 1100°C.

12. Method (100) according to any of the preceding claims, wherein at least part of the process gas (1) is subjected to fired heating (50, 51, 52), in which a fired heater is used, to obtain a fifth preheated process gas (6) having the fourth temperature level and/or the process gas (1), the third preheated process gas (4) or the first preheated process gas (2) is subjected to the fired heating (50, 51, 52) to obtain a sixth preheated process gas (7) having a fifth temperature level and/or the second preheated process gas (3) is subjected to, before the oxidation heating (40), the fired heating (50, 51, 52) to obtain a seventh preheated process gas (8) having to a sixth temperature level.

13. Method (100) according to claim 12, wherein the fifth temperature level is higher than the third temperature level and lower than the first temperature level or higher than the first temperature level and lower than the second temperature level and/or wherein the sixth temperature level is higher than the second temperature level and lower than the fourth temperature level.

14. Process arrangement (100) for heating a process gas (1) , in particular containing hydrogen and/or carbon monoxide, to a reaction temperature level,
**characterized in that** the process arrangement (100) is configured to subject a reducing gas (1) to direct electric heating (10) to obtain a first preheated reducing gas (2) having a first temperature level, and
subject the first preheated reducing gas (2) to indirect electric heating (20) to obtain a second preheated reducing gas (3) having a second temperature level higher than the first temperature level.

15. Process arrangement (100) according to claim 14, wherein the process arrangement (100) is configured to perform the method (100) for heating a reducing gas (1) according to any of claims 1 to 13.
